# EUROPEAN PATENT SPECIFICATION

(11) **EP 1 717 987 B1**
(45) Date of publication and mention of the grant of the patent: **09.01.2008**
(21) Application number: 05254875.7
(22) Date of filing: 04.08.2005
(51) Int. Cl.: H04L 12/10

(54) **Routing in powerline communication networks**
Weglenkung in Kommunikationsnetzwerken über Stromversorgungsleitungen
Acheminement dans des réseaux de communication par des lignes d'alimentation

(30) Priority: 28.04.2005 JP 2005132900
(43) Date of publication of application: 02.11.2006
(73) Proprietor: FUJITSU LIMITED, Kawasaki-shi, Kanagawa 211-8588 (JP)
(72) Inventor: Iwao, Tadashige, c/o Fujitsu Limited, Kanagawa 211-8588 (JP); Hosokawa, Takeshi, c/o Fujitsu Limited, Kanagawa 211-8588 (JP); Nomura, Koji, c/o Fujitsu Limited, Kanagawa 211-8588 (JP); Yamada, Kenji, c/o Fujitsu Network Technologies Li, Kanagawa 222-0033 (JP)
(74) Representative: Stebbing, Timothy Charles

(56) References cited:
- WO-A-20/04054119
- US-A1- 2004 056 734
- US-A1- 2004 073 939

## Description

The present invention relates to a communication apparatus, a communication node, and a communication method that execute communication processing of information signals. More particularly, the invention relates to a communication apparatus, a communication node, and a communication method that can be easily introduced and that can efficiently carry out communications, without installing a power supply for each communication node.

Conventionally, cable network apparatuses include cables, distribution apparatuses, and power supplies, with cables and communication equipment connected to dividers. In order to extend a network that is formed by this cable network apparatus, the dividers must be connected together by cables, and each divider must have a power supply.

In the cable network apparatus, a network is extended in an increasingly branching tree structure. Therefore, when a cable is disconnected in the middle, a communication apparatus connected downstream of the disconnected point cannot carry out communications.

On the other hand, a sensor network for carrying out radio communications using radio waves does not require communication cables, and therefore, can be installed easily. However, the sensor network requires a power supply for each node, similarly to the cable network apparatus.

The sensor network also requires an apparatus that handles radio waves at each node. Therefore, each node has large dimensions, and manufacturing cost of the sensor network increases. Furthermore, the radio communications have a low transmission rate, and are vulnerable to noise and jamming. Therefore, communications become unstable.

The 10BASE2 as an Ethernet (registered trade name) connection system connects nodes together with cables in a row. The 10BASE2 does not require dividers. However, when one of the cables is disconnected, none of the nodes can communicate. A power supply is also necessary for each node.

In order to solve problems concerning this power supply and stability of communications, there is a communication device that sandwiches each of scattered communication elements between two signal-transmitting conductive layers and that has a power supply layer for supplying power (see Japanese Patent Application Laid-Open No. 2004-7449). According to this communication device, the conductive layers directly connect each communication element, and the power supply layers can collectively supply power to each communication apparatus.

According to the above conventional technique, however, since signals are broadcasted when communications are carried out between the communication elements, the signals reach other communication elements that are irrelevant to the communications. As a result, communication efficiency of the communication elements deteriorates.

Even when the intensity of a signal transmitted from the communication element is adjusted so that the signal can reach only a nearby communication element, the signal still reaches a plurality of communication elements that are irrelevant to the communications when these communication elements are present near the target communication element. When a distance between communication elements becomes small, the intensity of the signal must be accurately adjusted, which becomes difficult.

Therefore, it is important to develop a communication apparatus that can be easily introduced and that can efficiently carry out communications, without installing a power supply for each communication node.

US 2004/0056734 A1 discloses a power line based communication system including a powerline termination module, a plurality of powerline gateways, and a plurality of powerline nodes. AC coupling modules couple powerline nodes to medium voltage power lines. One AC coupling module includes a housing having an upper portion that contains a transformer and a lower portion that contains a power node. Another AC coupling module intercouples a powerline node to a test point of a dead front transformer. Still another AC coupling module employs a surge arrestor to couple signals between a powerline node and a medium voltage transmission line. Yet another AC coupling module clamps on a medium voltage power line to couple signals between a powerline node and a medium voltage power line.

The present invention is defined in the attached independent claims, to which reference should now be made. Further, preferred features may be found in the subclaims appended thereto.

A communication apparatus according to one aspect of the present invention includes a plurality of communication nodes that select one communication route from among a plurality of communication routes, and perform a unicast communication with a communication partner on the communication route selected; and a wire that is used as a medium for supplying power to each of the communication nodes and as a communication medium between communication nodes, and connects each of the communication nodes to form a network of the communication route.

A communication node according to another aspect of the present invention includes a power receiving unit that receives power from a wire that is used as a medium for supplying power to a plurality of communication nodes and as a communication medium between the communication nodes, and connects the communication nodes to form a network of communication routes; and a communication-processing executing unit that select one communication route from among a plurality of communication routes, and perform a unicast communication with a communication partner on the communication route selected, using the power received as a driving energy source.

A communication method according to still another aspect of the present invention includes receiving power from a wire that is used as a medium for supplying power to a plurality of communication nodes and as a communication medium between the communication nodes, and connects the communication nodes to form a network of communication routes; selecting one communication route from among a plurality of communication routes; and performing a unicast communication with a communication partner on the communication route selected, using the power received as a driving energy source.

In the above apparatus, node and method, the "wire" can be any physical medium capable of conducting electrical, electromagnetic or optical signals, and may comprise separate media for supplying power and for conducting information signals.

The above and other features, advantages and technical and industrial significance of this invention will be better understood by reading the following detailed description of presently preferred embodiments of the invention, when considered in connection with the accompanying drawings, in which:
Fig. 1 is a schematic of a communication apparatus 10 according to an embodiment of the present invention;
Fig. 2 is a schematic for illustrating various states detected by a sensor 15 connected to a terminal interface 14;
Fig. 3 is a block diagram of a communication node 11 shown in Fig. 1;
Fig. 4 is a schematic of a frame format of a message exchanged between the communication nodes 11;
Fig. 5 is a flowchart of a processing procedure of a communication processing when a message is received from a terminal interface 25; and
Figs. 6A and 6B are flowcharts of a processing procedure of a communication processing when a message is received from the joint interfaces 21₁ to 21ₙ.

Exemplary embodiments of a communication apparatus, a communication node, and a communication method according to the present invention will be explained in detail with reference to the accompanying drawings. The present invention is not limited bv the embodiments.

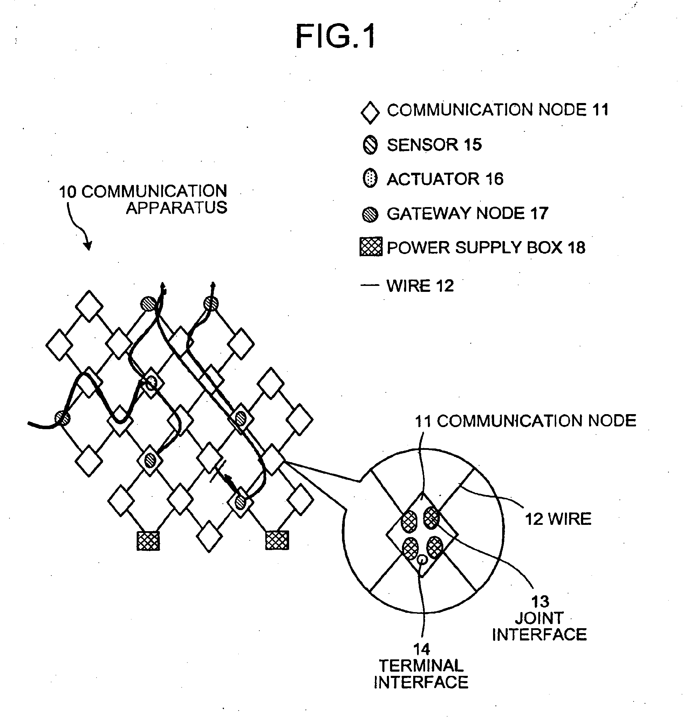

Fig. 1 is a schematic of a communication apparatus 10 according to an embodiment of the present invention. As shown in Fig. 1, the communication apparatus 10 has a plurality of communication nodes 11, and a wire 12.

Each communication node 11 selects one communication route from among a plurality of communication routes, and carries out unicast communications with another communication node 11 on the selected communication route. The wire 12 becomes a medium for supplying power to each communication node 11 and also becomes a communication medium between the communication nodes 11. The wire 12 forms a meshed communication route by connecting between communication nodes 11.

Gateway nodes 17 and power supply boxes 18 are connected to the communication apparatus 10. Each gateway node 17 has a gateway function of transmitting information sent from the communication node 11 to another apparatus via a network.

Each power supply box 18 is a power supply for supplying power to each communication node 11 via the wire 12. A plurality of gateway nodes 17 and a plurality of power supply boxes 18 can be connected to the communication apparatus 10.

When the communication apparatus 10 has the above configuration, it is not necessary to install a power supply for each communication node 11. Since the communication apparatus 10 selects one communication route and carries out unicast communications with the communication node 11 on the selected communication route, other communication nodes 11 that are irrelevant to the concerned communications are not affected by the communications.

Therefore, it is not necessary to adjust a communication range of the communication elements like the communication device according to the conventional technique. The communication apparatus according to the present invention can be introduced easily and can carry out communications efficiently.

As shown in Fig. 1, the communication node 11 has a plurality of joint interfaces 13 that connect between wires 12, and a terminal interface 14 that connects various kinds of terminals such as a sensor 15 and an actuator 16.

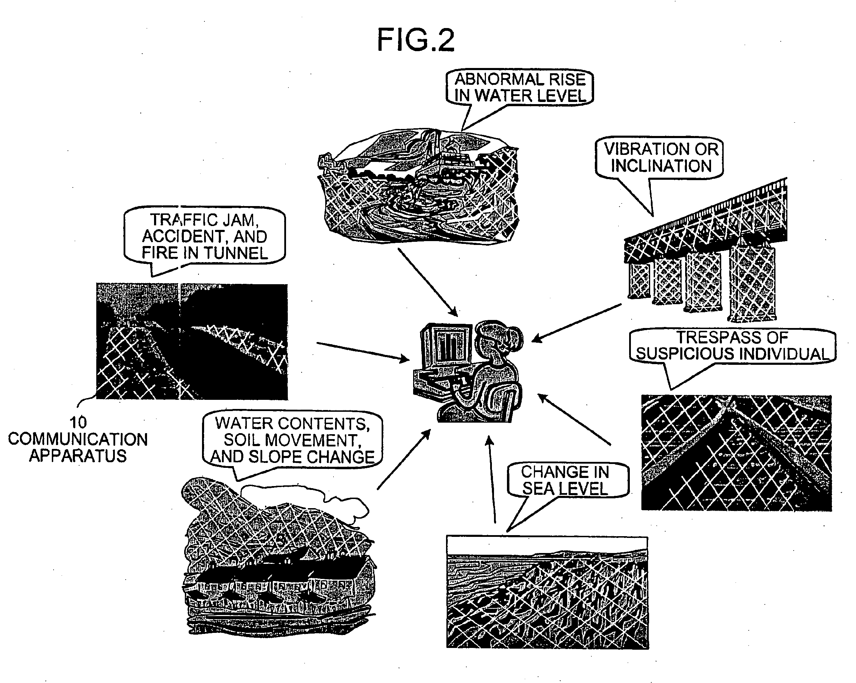

Fig. 2 is a schematic for illustrating various states detected by a sensor 15 connected to a terminal interface 14. As shown in Fig. 2, the communication apparatus 10 that forms a meshed communication route by connecting between the communication nodes 11 with the wire 12 is installed on a road, a tunnel, a river bank, a coast, a cliff, a bridge pier, a railroad tie on a railroad, and the like.

The terminal interface 14 of the communication apparatus 10 is installed with the sensor 15 that detects various kinds of physical states such as a pressure sensor, a smoke detector, a temperature sensor, a vibration sensor, a slope detector, a moisture sensor, and the like.

Thus, the communication apparatus 10 can obtain information about a car accident, a traffic jam, or a fire on a road or in a tunnel, an abnormal rise in water level of a river, a change in a sea level at a coast, water contents or soil movement on a cliff, a slope change, a vibration or an inclination of a bridge pier, a trespass of a suspicious individual into the railroad, and the like.

The information obtained by the sensor 15 is transmitted to the gateway node 17 connected to the communication apparatus 10, and is further transmitted from the gateway node 17 to a monitoring center via the network.

The actuator 16 receives a control signal, and controls the operation of a device such as a camera or a siren (not shown) based on the received control signal. The monitoring center transmits a control signal to the actuator 16 to remote-control the device such as the camera or the siren.

In order to prevent mechanical damage of the communication node 11 and the wire 12 when large force is applied to the communication apparatus 10, a reinforcing wire that is not bent by the large force can be fitted to the back surface of the communication apparatus 10 along the communication node 11 and the wire 12.

A connection point of the communication node 11 for connecting between the wire 12 and the communication node 11 is formed such that the wire 12 can be detachably fitted to this connection point. With this arrangement, a layout mode of the communication apparatus 10 can be changed easily.

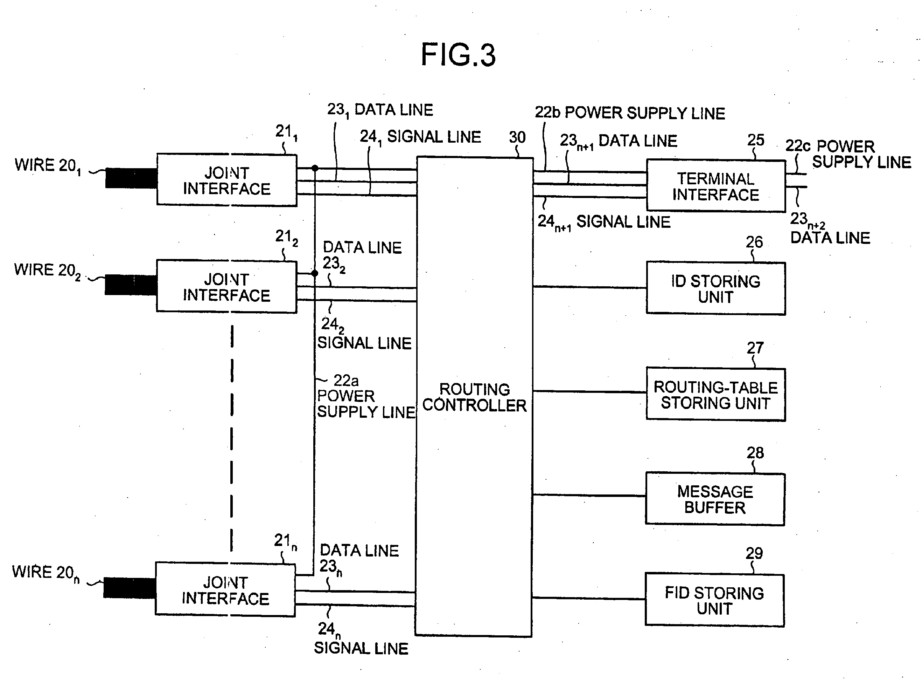

Fig. 3 is a block diagram of a communication node 11 shown in Fig. 1. As shown in Fig. 3, the communication node 11 has wires 20₁ to 20ₙ, joint interfaces 21₁ to 21ₙ, power supply lines 22a to 22c, data lines 23₁ to 23ₙ₊₂, signal lines 24₁ to 24ₙ₊₂, a terminal interface 25, an ID storing unit 26, a routing table storing unit 27, a message buffer 28, a FID storing unit 29, and a routing controller 30.

The wires 20₁ to 20ₙ correspond to the wire 12 explained with reference to Fig. 1, and are mediums for supplying power to the communication nodes 11 and communication mediums between the communication nodes 11.

The joint interfaces 21₁ to 21ₙ correspond to the joint interface 13 explained with reference to Fig. 1, and are connecting units that are physically connected to the wires 20₁ to 20ₙ The joint interfaces 21₁ to 21ₙ separate power supplied via the wires 20₁ to 20ₙ from signals transmitted from the monitoring center or the like.

It is assumed that power is supplied from a direct-current power supply at a constant voltage, and that signals are transmitted, being superimposed on this power. In this case, the joint interfaces 21₁ to 21ₙ extract the signals by detecting a change in the voltage.

Alternatively, the wires 20₁ to 20ₙ can consist of a wire for transmitting signals and a wire for transmitting power, and the signals and the power can be taken out from these two wires separately.

The joint interfaces 21₁ to 21ₙ incorporate an overcurrent preventing device and an overvoltage preventing device. When an overcurrent and an overvoltage occur, the joint interfaces 21₁ to 21ₙ block the power supplied from the wires 20₁ to 20ₙ, and notify the occurrence of the abnormality to the routing controller 30 via the signal line 24₁ to 24ₙ₊₂.

The power supply lines 22a to 22c are used to transmit power extracted by the joint interfaces 21₁ to 21ₙ to the routing controller 30, the terminal interface 25, and the sensor 15 and the actuator 16 that are connected to the terminal interface 25.

The data lines 23₁ to 23ₙ₊₂ are used to transmit data obtained by the sensor 15 and data transmitted from the management center to the actuator 16. The signal lines 24₁ to 24ₙ₊₂ are used to control data exchanges between the joint interfaces 21₁ to 21ₙ and the routing controller 30.

The ID storing unit 26 is a storage device such as a memory, which stores ID (identification) information for uniquely identifying the own communication node 11. Communications between the communication nodes 11 are carried out based on this identification information.

The routing table storing unit 27 is a storage device such as a memory, which stores a routing table that is used to determine an optimum communication route at the time of transmitting a message to another communication node 11.

Specifically, the routing table storing unit 27 stores information of a message destination, information of the joint interfaces 21₁ to 21ₙ from which the message is to be output at the time of transmitting the message to this destination, and the ID information of the communication node 11 connected to the joint interfaces 21₁ to 21ₙ and adjacent to the communication node 11, by relating these pieces of information.

The message buffer 28 is a storage device such as a memory, which temporarily stores a message received from another communication node 11 or the sensor 15. The FID storage 29 is a storage device such as a memory, which stores FID (frame identification) for uniquely identifying each message.

When receiving a message from the other communication node 11 or the sensor 15, the routing controller 30 selects the joint interfaces 21₁ to 21ₙ from which the message is to be output according to the destination of the message, and outputs the message from the selected joint interfaces 21₁ to 21ₙ.

Specifically, when receiving a message, the routing controller 30 stores this message into the message buffer 28. The routing controller 30 extracts the message from the head of the message buffer 28, and retrieves the destination of the message from the routing table stored in the routing table storing unit 27.

The routing controller 30 obtains the information of the joint interfaces 21₁ to 21ₙ corresponding to the retrieved destination of the message, from the routing table, and transmits the message from the joint interfaces 21₁ to 21ₙ.

When a destination of a message is the own (the same) communication node 11, the routing controller 30 outputs the message from the terminal interface 25 to the actuator 16 connected to the terminal interface 25.

When a transmission source of a message is the own communication node 11 and also when there is no information of the joint interfaces 21₁ to 21ₙ corresponding to the message destination, the routing controller 30 retrieves a route and establishes a communication route.

When a transmission source of a message is not the own communication node 11 and also when there is no information of the joint interfaces 21₁ to 21ₙ corresponding to the message destination, the routing controller 30 transmits an error message to the communication node 11 of the transmission source of the message.

When abnormality of an overcurrent or an overvoltage occurs in the joint interfaces 21₁ to 21ₙ, the routing controller 30 instantly transmits an abnormality notification message of the occurrence of the abnormality to a prescribed node such as the gateway node 17.

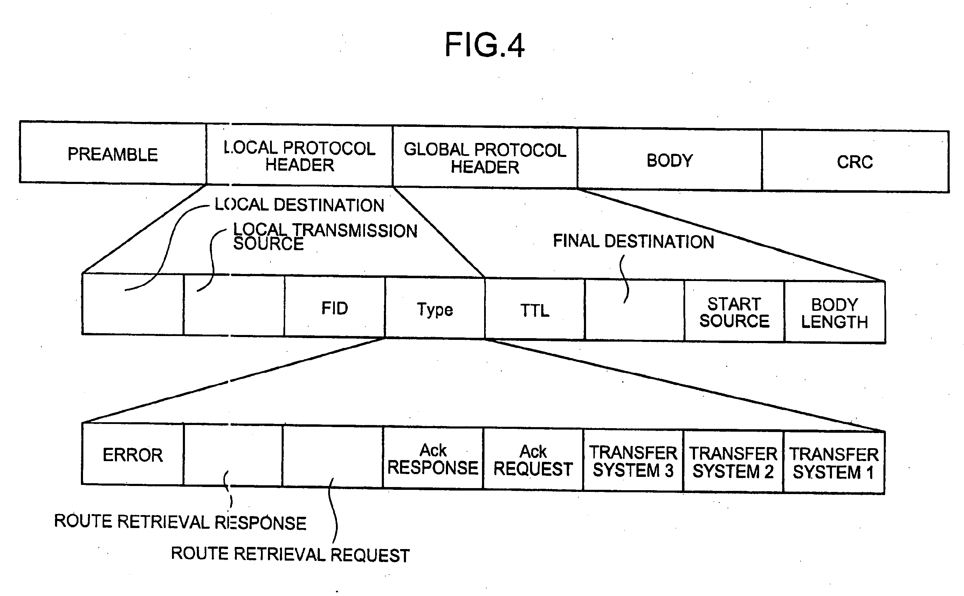

Fig. 4 is a schematic of a frame format of a message exchanged between the communication nodes 11. As shown in Fig. 4, a message frame consists of a preamble, a local protocol header, a global protocol header, a body, and a cyclic redundancy check (CRC).

The preamble is a signal that is used for clock synchronization. The local protocol header is used in communications between two adjacent communication nodes 11. The local protocol header contains information of a local destination, a local transmission source, FID, and Type.

The local destination is ID information of the communication node 11 that becomes a communication destination in communications between two adjacent communication nodes 11. The local transmission source is information of the communication node 11 that becomes a communication source in communications between two adjacent communication nodes 11. The FID is ID information for uniquely identifying the own message.

Type is information for identifying a type of a message. As types of messages, there are an error message, a route retrieval request message, a route retrieval response message, an Ack response message, an Ack request message, and a transfer message. A flag is set within the Type (error, route retrieval request, route retrieval response, Ack response, Ack request, transfer system 3, transfer system 2, and transfer system 1) to identify the message.

The transfer system 3, the transfer system 2, and the transfer system 1 are flags for specifying a transfer system at the time of transferring a message. For example, these flags are used to specify a method of selecting a route on which the number of communication nodes 11 to be passed is smallest, a method of selecting a plurality of routes, and a method of selecting a route on which communication load is dispersed.

The global protocol header is a protocol used for communications between two communication nodes 11 at communication ends. The global protocol header contains information of TTL (time to live), a final destination, a start source, and a body length.

The TTL is information indicates a maximum number of times of transferring a message. When the number of times of transfer exceeds this value, the message is discarded. The final destination is information of the communication node 11 as a final destination of the message out of two communication nodes 11 at the communication ends. The start source is information of the communication node 11 as a transmission starting source of a message out of two communication nodes 11 at the communication ends. The body length is a length of a body of the message.

The body is data that is transmitted between the communication nodes. The CRC is a check sign for detecting an error.

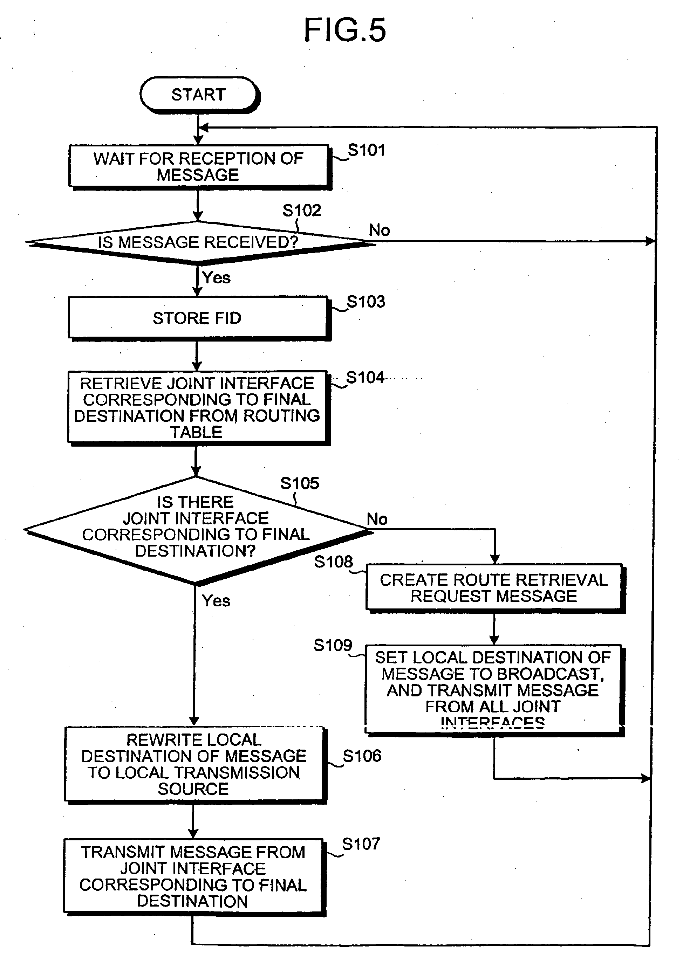

Fig. 5 is a flowchart of a processing procedure of communication processing when a message is received from a terminal interface 25. As shown in Fig. 5, the routing controller 30 of the communication node 11 waits for a reception of a message from the terminal interface 25 (step S101). The routing controller 30 checks whether a message is received (step S102). When a message is not received (step S102: No), the process returns to step S101, and the routing controller 30 waits for a reception of a message.

When a message is received from the terminal interface 25 (step S102: Yes), the routing controller 30 stores the FID of the message into the FID storing unit 29 (step S103).

The routing controller 30 retrieves the joint interfaces 21₁ to 21ₙ corresponding to the final destination of the message from the routing table stored in the routing table storing unit 27 (step S104), and checks whether there are the joint interfaces 21₁ to 21ₙ corresponding to the final destination (step S105).

When the joint interfaces 21₁ to 21ₙ corresponding to the final destination are present (step S105: Yes), the routing controller 30 rewrites a local destination of the message to the communication node 11 connected to the joint interfaces 21₁ to 21ₙ and adjacent to the own communication node 11. Furthermore, the routing controller 30 rewrites a local transmission source to the own communication node 11 (step S106).

Thereafter, the routing controller 30 transmits a message from the joint interfaces 21₁ to 21ₙ corresponding to the final destination (step S107), the process returns to step S101, and the routing controller 30 waits for a reception of the next message.

On the other hand, when the joint interfaces 21₁ to 21ₙ corresponding to the final destination are not present at step S105 (step S105 : No). the routing controller 30 creates a route retrieval request message (step S108).

The routing controller 30 sets a local destination of the message to a broadcast, and transmits the message from all the joint interfaces 21₁ to 21ₙ based on broadcast communication (step S109).

The process returns to step S101, and the routing controller 30 waits for a reception of a next message.

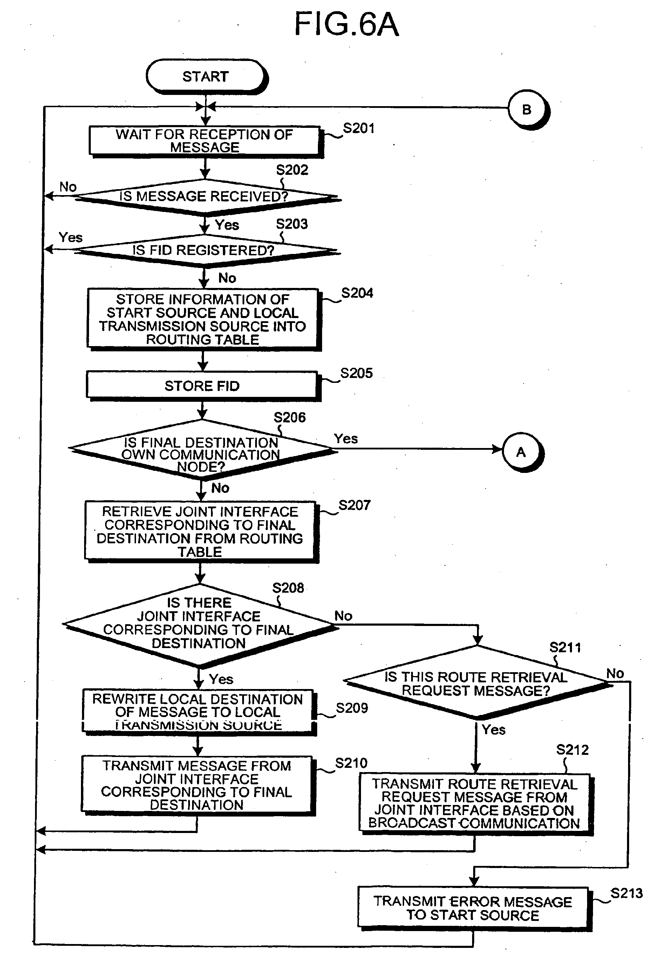

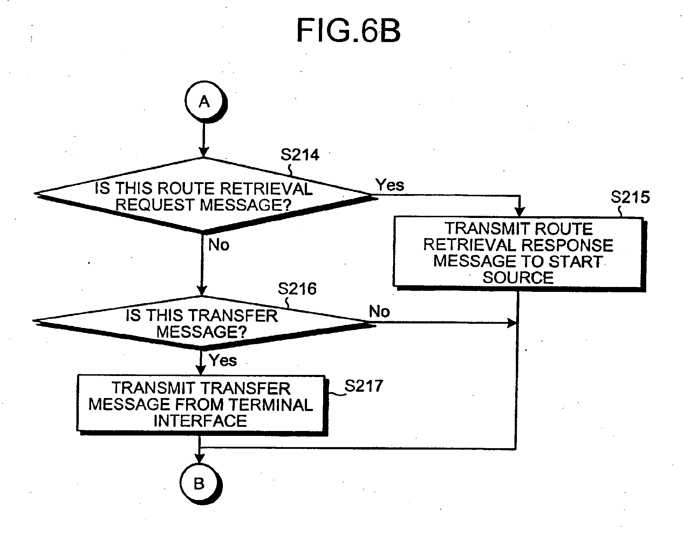

Fig. 6A and Fig. 6B are flowcharts of a processing procedure of a communication processing when a message is received from the joint interfaces 21₁ to 21ₙ. As shown in Fig. 6A, the routing controller 30 of the communication node 11 waits for a reception of a message from the joint interfaces 21₁ to 21ₙ (step S201).

The routing controller 30 checks whether a message is received (step S202). When a message is not received (step S202: No), the process returns to step S201, and the routing controller 30 waits for a reception of a message.

When a message is received from the joint interfaces 21₁ to 21ₙ (step S202: Yes), the routing controller 30 checks whether the FID of the message is registered in the FID storing unit 29 (step S203).

When the FID of the message is registered (step S203: Yes), since the message is transmitted from the own communication node 11, the process returns to step S201, and the routing controller 30 waits for a reception of the next message.

When the FID of the message is not registered (step S203: No), the routing controller 30 stores the information of the start source of the message as the information of the destination of the message and stores the information of the local transmission source as the information of the communication node 11 connected to the joint interfaces 21₁ to 21ₙ and adjacent to the communication node 11, into the routing table by relating these pieces of information to the joint interfaces 21₁ to 21ₙ that receive the message (step S204). The routing controller 30 also stores the FID of the message into the FID storing unit 29 (step S205).

The routing controller 30 checks whether the final destination of the message is the own communication node 11 (step S206). When the final destination of the message is not the own communication node 11 (step S206: No), the routing controller 30 retrieves the routing table for the joint interfaces 21₁ to 21ₙ corresponding to the final destination of the message (step S207), and checks whether the joint interfaces 21₁ to 21ₙ corresponding to the final destination are present (step S208).

When the joint interfaces 21₁ to 21ₙ corresponding to the final destination are present (step S208: Yes), the routing controller 30 rewrites a local destination of the message to the communication node 11 connected to the joint interfaces 21₁ to 21ₙ and adjacent to the own communication node 11. Furthermore, the routing controller 30 rewrites a local transmission source to the own communication node 11 (step S209).

Thereafter, the routing controller 30 transmits a message from the joint interfaces 21₁ to 21ₙ corresponding to the final destination (step S210), the process returns to step S201, and the routing controller 30 waits for a reception of the next message.

On the other hand, when the joint interfaces 21₁ to 21ₙ corresponding to the final destination are not present at step S208 (step S208: No), the routing controller 30 checks whether the received message is a route retrieval request message (step S211).

When the message is a route retrieval request message (step S211: Yes), the routing controller 30 transmits the route retrieval request message from the joint interfaces 21₁ to 21ₙ based on broadcast communication (step S212). The process returns to step S201, and the routing controller 30 waits for a reception of a next message.

When the message is not a route retrieval request message (step S211: No), the routing controller 30 transmits an error message to the communication node 11 at the start source (step S213). The process returns to step S201, and the routing controller 30 waits for a reception of the next message.

When the final destination of the received message is the own communication node 11 at step S206 (step S206: Yes), the routing controller 30 checks whether the message is a route retrieval request message, as shown in Fig. 6B (step S214).

When the message is a route retrieval request message (step S214: Yes), the routing controller 30 transmits a route retrieval response message to the communication node 11 of the start source (step S215). The process returns to step S201, and the routing controller 30 waits for a reception of the next message.

When the message is not a route retrieval request message (step S214: No), the routing controller 30 checks whether the message is a transfer message (step S216).

When the message is a transfer message (step S216: Yes), the routing controller 30 transmits the transfer message from the terminal interface 25 to the actuator 16 and the like (step S217). The process returns to step S201, and the routing controller 30 waits for a reception of the next message.

When the message is not a transfer message (step S216: No), the process returns to step S201, and the routing controller 30 waits for a reception of the next message.

As described above according to the present embodiment, the joint interfaces 21₁ to 21ₙ of the communication node 11 receive a power supply from the wire 12 that is used as a medium for supplying power to a plurality of communication nodes 11 and as a communication medium between the communication nodes 11, and that forms a meshed communication route by connecting the communication nodes 11. The routing controller 30 of the communication node 11 selects one communication route from among a plurality of communication routes, using the supplied power as a driving energy source. The routing controller 30 carries out unicast communications with another communication party on the selected communication route. Therefore, the communication apparatus can be easily introduced and can efficiently carry out communications, without installing a power supply for each communication node 11.

Furthermore, according to the present embodiment, the communication node 11 communicates with the gateway node 17 that is connected to the wire 12. Therefore, the communication node 11 can communicate with other networks via the gateway node 17.

Moreover, according to the present embodiment, the wire 12 connects between a plurality of power supply boxes 18 or between a plurality of gateway nodes 17. Therefore, the communication apparatus 10 can maintain its function by connecting between the power supply boxes 18 and between the gateway nodes 17, even when one of these power supply boxes or gateway nodes has failure.

Furthermore, according to the present embodiment, the communication apparatus 10 further includes a reinforcing device such as a reinforcing wire that reinforces the communication nodes 11 or the wire 12. Therefore, even when large force is applied to the communication apparatus 10, it is possible to prevent the communication apparatus 10 from being mechanically damaged.

Moreover, according to the present embodiment, the wire 12 can be connected to or disconnected from the communication nodes 11. Therefore, a layout mode and a configuration of the communication apparatus 10 can be changed easily.

Furthermore, according to the present embodiment, the communication node 11 has the terminal interface 14 that connects devices such as the sensor 15 and the actuator 16, and communicates with devices such as the sensor 15 and the actuator 16 connected to the terminal interface 14. Therefore, by connecting the devices such as the sensor 15 and the actuator 16 to the communication node 11, the communication apparatus 10 can collect information obtained by the sensor 15 and transmit control information to the actuator 16.

Exemplary embodiments of the present invention are described above. However, variously modified embodiments other than the ones described can be made within the scope of the appended claims.

Of the respective processing explained in the embodiments, all or a part of the processing explained as being performed automatically can be performed manually, or all or a part of the processing explained as being performed manually can be performed automatically in a known method.

The information including the processing procedure, the control procedure, specific names, and various kinds of data and parameters shown in the specification or in the drawings can be optionally changed, unless otherwise specified.

The respective constituents of the illustrated apparatus are functionally conceptual, and the physically same configuration is not always necessary. In other words, the specific mode of dispersion and integration of the apparatus is not limited to the illustrated one, and all or a part thereof may be functionally or physically dispersed or integrated in an optional unit, according to the various kinds of load and the status of use.

All or an optional part of the various processing functions performed by the apparatus can be realized by the CPU or a program analyzed and executed by the CPU, or can be realized as hardware by the wired logic.

In an embodiment of the invention, a communication apparatus receives a power supply from a wire that is used as a medium for supplying power to a plurality of communication nodes and as a communication medium between the communication nodes, and that forms a meshed communication route by connecting the communication nodes. The communication apparatus selects one communication route from among a plurality of communication routes, using the supplied power as a driving energy source. The communication apparatus carries out unicast communications with another communication party on the selected communication route. Therefore, the communication apparatus can be easily introduced and can efficiently carry out communications, without installing a power supply for each communication node.

Furthermore, according to the present invention, a communication node communicates with a gateway device that is connected to the wire. Therefore, the communication node can communicate with other networks via the gateway device.

Moreover, according to the present invention, the wire connects between a plurality of power supplies or between a plurality of gateway devices. Therefore, the communication apparatus can maintain its function by connecting between a plurality of power supplies and between a plurality of gateway devices, even when one of these power supplies or gateway devices has failed.

Furthermore, according to the present invention, the communication apparatus further includes a reinforcing device that reinforces the communication nodes or the wire. Therefore, even when large force is applied to the communication apparatus, it is possible to prevent the communication apparatus from being mechanically damaged.

Moreover, according to the present invention, the wire can be connected to or disconnected from the communication nodes. Therefore, a layout mode and a configuration of the communication apparatus can be changed easily.

Furthermore, according to the present invention, a communication node has an interface that connects the communication apparatus to another apparatus, thereby communicating with the other apparatus connected to the interface. Therefore, by connecting a device such as a sensor and an actuator to the communication node, the communication apparatus can collect information obtained by the sensor and transmit control information to the actuator.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A communication apparatus (10) comprising:
a plurality of communication nodes (11) each comprising a power-supply receiving unit that receives power for power supply and a communication-processing executing unit that selects one communication route from among a plurality of communication routes, and perform a unicast communication with a communication partner on the communication route selected using the power received as a driving energy source; **characterised in that** the apparatus further comprises:
a plurality of wires (12) that are used as a medium for supplying power to each of the communication nodes (11) and as a communication medium between communication nodes (11), and connect each of the communication nodes to form a network of the communication route and at least two distinct power supplying routes, wherein the power is supplied to each of the communication nodes (11) via the power supplying routes.

2. The communication apparatus (10) according to claim 1, wherein each of the communication nodes (11) performs a communication with a gateway device (17) connected to the wires (12).

3. The communication apparatus (10) according to claim 1 or 2, wherein the wires (12) connect a plurality of power supplies (18) or a plurality of gateway devices (17).

4. The communication apparatus according to any preceding claim, further comprising a reinforcing wire that is fitted to a back surface along the communication nodes (11) or along the wires (12) to reinforce the communication nodes (11) or to reinforce the wires (12).

5. The communication apparatus (10) of any preceding claim, wherein each of the communication nodes (11) includes an interface (14) for connecting other terminals (15, 16), and performs a communication with the other terminal (15, 16) connected to the interface (14).

6. A communication method comprising:
receiving power for power supply from a wire (12) that is used as a medium for supplying power to a plurality of communication nodes (11) and as a communication medium between the communication nodes (11), and connects the communication nodes to form a network of communication routes and at least two distinct power supplying routes, wherein the power is supplied to each of the communication nodes (11) via the power supplying routes;
executing, using the power received as a driving energy source; including the steps of
selecting one communication route from among a plurality of communication routes; and
performing a unicast communication with a communication partner on the selected communication route selected.

## Patentansprüche

1. Kommunikationsvorrichtung (10) mit:
einer Vielzahl von Kommunikationsknoten (11), die jeweils eine Energiezuführungsempfangseinheit umfassen, die Energie zur Energiezuführung empfängt, und eine Kommunikationsverarbeitungsausführungseinheit, die eine Kommunikationsroute von einer Vielzahl von Kommunikationsrouten selektiert und eine Unicast-Kommunikation mit einem Kommunikationspartner auf der selektierten Kommunikationsroute durchführt, wobei die empfangene Energie als Antriebskraftquelle verwendet wird;
**dadurch gekennzeichnet, dass** die Vorrichtung ferner umfasst:
eine Vielzahl von Drähten (12), die als Medium zum Zuführen von Energie zu jedem der Kommunikationsknoten (11) und als Kommunikationsmedium zwischen Kommunikationsknoten (11) verwendet werden und jeden der Kommunikationsknoten verbinden, um ein Netzwerk aus der Kommunikationsroute und wenigstens zwei verschiedenen Energiezuführungsrouten zu bilden, wobei die Energie jedem der Kommunikationsknoten (11) über die Energiezuführungsrouten zugeführt wird.

2. Kommunikationsvorrichtung (10) nach Anspruch 1, bei der jeder der Kommunikationsknoten (11) eine Kommunikation mit einer Gateway-Einrichtung (17) ausführt, die mit den Drähten (12) verbunden ist.

3. Kommunikationsvoxrichtung (10) nach Anspruch 1 oder 2, bei der die Drähte (12) eine Vielzahl von Energiezuführungen (18) oder eine Vielzahl von Gateway-Einrichtungen (17) verbinden.

4. Kommunikationsvorrichtung nach irgendeinem vorhergehenden Anspruch, ferner mit einem Versteifungsdraht, der auf einer hinteren Fläche längs der Kommunikationsknoten (11) oder längs der Drähte (12) verlegt ist, um die Kommunikationsknoten (11) zu versteifen oder die Drähte (12) zu versteifen.

5. Kommunikationsvorrichtung (10) nach irgendeinem vorhergehenden Anspruch, bei der jeder der Kommunikationsknoten (11) eine Schnittstelle (14) zum Verbinden von anderen Terminals (15, 16) enthält und eine Kommunikation mit den anderen Terminals (15, 16) durchführt, die mit der Schnittstelle (14) verbunden sind.

6. Kommunikationsverfahren mit:
Empfangen von Energie zur Energiezuführung von einem Draht (12), der als Medium zum Zuführen von Energie zu einer Vielzahl von Kommunikationsknoten (11) und als Kommunikationemedium zwischen den Kommunikationsknoten (11) verwendet wird und die Kommunikationsknoten verbindet, um ein Netzwerk aus Kommunikationsrouten und wenigstens zwei verschiedenen Energiezuführungsrouten zu bilden, bei dem die Energie jedem der Kommunikationsknoten (11) über die Energiezuführungsrouten zugeführt wird;
Ausführen, unter Verwendung der empfangenen Energie als Antriebskraftquelle, der Schritte:
Selektieren einer Kommunikationsroute von einer Vielzahl von Kommunikationsrouten; und
Durchführen einer Unicast-Kommunikation mit einem Kommunikationspartner auf der selektierten Kommunikationsroute.

## Revendications

1. Dispositif de communication (10) comprenant :
une pluralité de noeuds de communication (11) chacun comprenant une unité de réception de fourniture d'alimentation qui reçoit de la puissance pour l'alimentation et une unité d'exécution de traitement de communication qui sélectionne un itinéraire de communication parmi une pluralité d'itinéraires de communication, et exécute une communication à destinataire unique avec un partenaire de communication sur l'itinéraire de communication sélectionné en utilisant la puissance reçue en tant que source d'énergie d'excitation, **caractérisé en ce que** le dispositif comprend en outre :
une pluralité de câbles (12) qui sont utilisés en tant que support pour alimenter chacun des noeuds de communication (11) et en tant que support de communication entre les noeuds de communication (11), et connectent chacun des noeuds de communication pour former un réseau constitué de l'itinéraire de communication et d'au moins deux itinéraires de fourniture de puissance distincts, où la puissance est fournie à chacun des noeuds de communication (11) par l'intermédiaire des itinéraires de fourniture de puissance.

2. Dispositif de communication (10) selon la revendication 1, dans lequel chacun des noeuds de communication (11) exécute une communication avec un dispositif de passerelle (17) connecté aux câbles (12).

3. Dispositif de communication (10) selon la revendication 1 ou 2, dans lequel les câbles (12) connectent une pluralité d'alimentations (18) ou une pluralité de dispositifs de passerelles (17).

4. Dispositif de communication selon l'une quelconque des revendications précédentes, comprenant en outre un câble de renforcement qui est monté sur une surface arrière le long des noeuds de communication (11) ou le long des câbles (12) pour renforcer les noeuds de communication (11) ou pour renforcer les câbles (12).

5. Dispositif de communication (10) selon l'une quelconque des revendications précédentes, dans lequel chacun des noeuds de communication (11) comprend une interface (14) destinée à connecter d'autres terminaux (15, 16) et exécute une communication avec les autres terminaux (15, 16) connectés à l'interface (14).

6. Procédé de communication comprenant les étapes consistant à :
recevoir de la puissance pour l'alimentation depuis un câble (12) qui est utilisé en tant que support pour alimenter une pluralité de noeuds de communication (11) et en tant que support de communication entre les noeuds de communication (11), et connecte les noeuds de communication pour former un réseau d'itinéraires de communication et au moins deux itinéraires de fourniture de puissance distincts, où la puissance est fournie à chacun des noeuds de communication (11) par l'intermédiaire des itinéraires de fourniture de puissance,
exécuter, en utilisant la puissance reçue en tant que source d'énergie d'attaque, y compris les étapes consistant à :
sélectionner un itinéraire de communication parmi une pluralité d'itinéraires de communication, et
exécuter une communication à destinataire unique avec un partenaire de communication sur l'itinéraire de communication sélectionné.
